Europäisches Patentamt

European Patent Office

Office européen des brevets

(19)

(11) Numéro de publication : **0 066 661**
**B1**

(12) **FASCICULE DE BREVET EUROPÉEN**

(45) Date de publication du fascicule du brevet :
30.12.86

(21) Numéro de dépôt : 81400830.6

(22) Date de dépôt : 25.05.81

(51) Int. Cl.⁴ : **F 26 B 21/02**, F 26 B 25/00,
**F 26 B 13/20**

(54) **Appareil de séchage de bandes continues par air chaud, avec sustentation simultanée, notamment pour bandes de papier sortant d'impression.**

(43) Date de publication de la demande :
15.12.82 Bulletin 82/50

(45) Mention de la délivrance du brevet :
30.12.86 Bulletin 86/52

(84) Etats contractants désignés :
AT BE CH DE FR GB IT LI LU NL SE

(56) Documents cités :
DE-A- 1 900 287
DE-B- 1 299 667
FR-A- 1 273 507
FR-A- 2 100 738
FR-A- 2 151 230
FR-A- 2 154 183
FR-A- 2 161 643
FR-A- 2 401 683
FR-A- 2 406 172
FR-A- 2 410 800
US-A- 2 952 078
US-A- 3 448 526
US-A- 3 577 653
US-A- 3 587 177
US-A- 3 874 091
US-A- 3 946 501

(73) Titulaire : **M.E.G MATERIELS EQUIPEMENTS GRAPHI-
QUES Société dite: Société Anonyme
Z.I. Sud 15, rue du Dr Charcot
F-91422 Morangis Cedex (FR)**

(72) Inventeur : **Bodenan, René
104, Route de Corbeil
F-91360 Villemoisson Sur Orge (FR)**
Inventeur : **Teculescu, Nicolas
10, Place Corneille
F-92100 Boulogne (FR)**

(74) Mandataire : **Rodhain, Claude
Cabinet Claude Rodhain 30, rue la Boétie
F-75008 Paris (FR)**

EP 0 066 661 B1

Jouve, 18, rue St-Denis, 75001 Paris, France

## Description

La présente invention concerne un appareil de séchage à air chaud, avec sustentation simultanée, pour bandes continues de matériaux souples, notamment de bandes de papier sortant des groupes d'impression offset, du type comprenant une enveloppe à l'intérieur de laquelle sont disposées, entre deux ouvertures d'entrée et de sortie de bande, deux rangées d'éléments de soufflage disposées l'une au-dessus et l'autre au-dessous du plan de déplacement de la bande, ces éléments de soufflage présentant des fentes d'éjection d'air orientées transversalement par rapport à la direction d'avancement de la bande, ces fentes s'ouvrant vers la bande à sécher, lesdits éléments de soufflage étant reliés à au moins un ventilateur de recyclage et à une source de chaleur, l'enveloppe étant reliée, en outre, à un ventilateur d'extraction.

De tels appareils trouvent une application avantageuse dans le séchage de matériaux souples provenant d'un traitement antérieur exigeant l'évaporation et l'entraînement de produits liquides pouvant être évaporés, notamment le séchage de bandes de papier imprimé sortant d'une ligne d'impression offset et pour lesquelles on doit éliminer les solvants de l'encre déposée (solvants pétroliers constitués par des huiles légères dans le cas d'utilisation d'encres grasses se fixant par application de la chaleur).

Grâce à l'agencement de ces appareils, les produits à évaporer, par exemple les solvants des encres d'imprimerie, sont entraînés en un laps de temps très court, en raison de l'échange thermique très intense, tandis que les jets d'air chaud émis par les fentes des éléments de soufflage assurent une sustentation continue de la bande entre les ouvertures d'entrée et de sortie, en évitant tout contact de cette bande avec les constituants de l'appareil, qui pourrait être préjudiciable à la conservation du résultat obtenu sur la bande par le traitement antérieur considéré, en entraînant, par exemple, un étalement de l'encre non séchée dans le cas du papier imprimé. Dans ce même cas particulier, les bandes provenant des rotatives offset se déplacent à des vitesses qui sont couramment de 5 à 10 m/s et l'air chaud est soufflé à une température de 150 à 300 °C ; il en résulte que la bande de papier s'échauffe de 120 à 160 °C et qu'il convient ensuite de la refroidir avant de la couper et de la plier. Les éléments de soufflage de la série supérieure sont avantageusement décalés par rapport à ceux de la série inférieure, ce qui crée des ondulations dans le sens longitudinal qui annulent les ondulations transversales qui ont tendance à se produire sous l'effet de la tension de la bande.

On connaît déjà, par exemple par le brevet français FR-A-2 154 183 ou le brevet des Etats-Unis d'Amérique 3 739 491, des appareils de ce type dans lesquels l'enveloppe est d'une seule pièce sur toute la longueur de l'appareil et la source de chaleur qui y est incorporée (brûleur) est unique pour l'ensemble et y est disposée de façon asymétrique.

On connaît également, par exemple par la demande de brevet allemand DE-B-1 299 667, des appareils ayant une structure analogue et dans lesquels l'enveloppe est également d'une seule pièce, tandis qu'il y est prévu deux sections successives de soufflage à chacune desquelles est associé un ventilateur recevant de l'air recyclé chauffé par deux installations de chauffage indépendantes reprenant l'air intérieur de l'enveloppe. Aux fentes d'entrée et de sortie de l'enveloppe sont associés des boîtiers de soufflage d'air recyclé extrait de l'enveloppe elle-même et ayant traversé une installation d'épuration catalytique, ces soufflages d'entrée et de sortie ayant uniquement pour but d'éviter une fuite très élevée de gaz nocifs par les fentes d'entrée et de sortie. Il est bien précisé dans cette demande qu'il n'existe aucune dépression notable (colonne 1, ligne 50) dans la chambre et, étant donné par ailleurs qu'aucun exemple n'est donné pour le produit en bande à sécher, on doit considérer que de tels appareils ne sont pas du type considéré par l'invention.

Il en est de même de l'appareil décrit dans le brevet des Etats-Unis d'Amérique 3 577 653 dans lequel il est prévu à l'entrée et à la sortie de l'enveloppe des boîtiers qui sont traversés par des flux d'air qui ne sont pas préchauffés et qui sont directement évacués par des ventilateurs d'extraction prévus à cet effet, la seule fonction de ces boîtiers étant d'empêcher une sortie de solvant (pour revêtement magnétique sur film plastique) dans les locaux (colonne 3, ligne 45), et non une entrée d'air extérieur froid pouvant entraîner une condensation.

La même remarque s'applique au brevet FR-2 161 643 où l'on ne cherche qu'à éliminer les couches limites pour favoriser le traitement thermique de tôles peintes (page 9, ligne 13).

En effet, on a constaté que divers inconvénients apparaissent lorsqu'on désire adapter des appareils de séchage du type en question à des lignes de traitement fonctionnant à des vitesses considérables, telles que celles des rotatives à grande vitesse (pouvant atteindre 10 m/s).

C'est ainsi, notamment, que l'apport de produits (par exemple des solvants qui entraînent d'autres composants de l'encre) devient très important et que leur point de rosée augmente (40 °C, pouvant atteindre 70 °C), de sorte que des condensations ont lieu aux ouvertures d'entrée d'air de séchage, ce qui peut entraîner une maculation de la bande ou même un bouchage de certaines ouvertures provoquant une perte de sustentation qui nécessite un arrêt de l'appareil et de toute la ligne. C'est essentiellement l'air froid extérieur qui rentre par les fentes d'entrée et de sortie de la bande (brevet US-A-3 739 491 précité, colonne 3, ligne 31) ou par la porte de contrôle (colonne 3, ligne 19), qui constitue une source de condensation du type brouillard en rencontrant l'air chaud chargé de solvant qui s'élève de la bande. Cette entrée d'air froid extérieur distingue donc essentiellement les appareils du type ici considéré de ceux tels que décrits dans la demande allemande précitée.

En outre, la consommation d'énergie thermique de ces mêmes appareils connus est extrêmement élevée, en raison de l'importance du débit d'air usé (extrait), ce qui exige d'ailleurs également l'utilisation, en aval, d'épurateurs de grande dimension et une nouvelle consommation importante d'énergie. Ce débit est dû, en particulier, et ici encore, aux rentrées élevées d'air froid par les fentes d'entrée et de sortie de l'enveloppe et il ne peut être, réduit sans risque de refoulement dans les locaux de l'air recyclé, chargé en solvants.

Il convient encore de noter que, dans le cas de l'impression, sur un même type d'appareil, la quantité de solvant varie d'une manière extrêmement importante, pouvant être dans un rapport de 1 à 100, en fonction du produit, de sorte que, dans certains cas, la concentration en solvant est trop élevée et entraîne une condensation néfaste, même si sur certains appareils on a essayé de maintenir une dépression constante en asservissant le débit d'extraction de l'air usé à cette dépression, cette régulation par la dépression étant nettement insuffisante dans le cas des concentrations maximales en solvant.

Enfin, dans le même type considéré d'appareils, l'aspiration du ventilateur est située en aval du brûleur (en prenant en ligne de compte le sens du recyclage de l'air de séchage), alors que son refoulement est directement relié aux éléments de soufflage par un caisson en forme de sifflet, ce qui présente comme inconvénient le fait que, si la flamme se dérègle (en raison d'une baisse de pression d'air ou d'une augmentation de pression de gaz), elle se trouve avalée par le ventilateur, ce qui entraîne une dégradation de celui-ci et même sa destruction définitive, ce à quoi s'ajoute le fait qu'avec une telle disposition, la pression du ventilateur étant liée à la densité de l'air, donc à sa température qui peut varier de 120 à 300 °C, il apparaît des variations de pression considérables qui sont également nuisibles à une bonne uniformité du soufflage et à une sustentation convenable de la bande.

C'est pourquoi la présente invention a pour but de supprimer d'une manière générale les divers inconvénients présentés par les appareils de séchage connus, et plus particulièrement et surtout les deux premiers cités plus haut, à savoir la condensation à l'intérieur de l'enveloppe et, d'autre part, l'importance du débit d'extraction d'air usé et donc de la consommation d'énergie thermique.

A cet effet, l'invention a pour objet un appareil du type considéré caractérisé en ce que, suivant la direction d'avancement de la bande, l'enveloppe est constituée d'au moins deux sections distinctes fixées entre elles, chacune de ces sections comprenant un ensemble de soufflage, celui-ci comportant deux rangées d'éléments de soufflage et un ventilateur de recyclage dont l'aspiration communique avec le volume intérieur de la section de l'enveloppe et le refoulement est raccordé auxdites rangées d'éléments de soufflage par des conduits équipés de passages d'apport de chaleur reliés à la source de chaleur, et en ce que chacune des deux ouvertures d'entrée et de sortie de bande est équipée de deux éléments de soufflage qui sont placés l'un en dessus et l'autre en dessous de cette ouverture et qui sont orientés transversalement par rapport à la direction de déplacement de la bande et présentant chacun, sur toute la largeur de cette bande, au moins une fente d'éjection d'air s'ouvrant vers la bande à sécher, ces éléments de soufflage étant reliés au refoulement d'un ventilateur qui aspire de l'air à l'extérieur de l'enveloppe de l'appareil, cet air étant préchauffé à l'aide de moyens de préchauffage.

La première de ces deux caractéristiques est connue en soi par exemple par le brevet des Etats-Unis d'Amérique 3 946 501 et les deux brevets français 2 100 738 et 2 410 800, tandis que la seconde caractéristique est connue en soi par le premier de ces brevets français. Ainsi, l'enveloppe complète de l'appareil, qui, pour les grandes vitesses de passage maintenant exigées, notamment sur les rotatives offset d'imprimerie, doit atteindre une longueur considérable, par exemple d'environ 7 m, se trouve subdivisée en plusieurs sections, par exemple au nombre de deux ou trois, mais pouvant, si nécessaire, être plus nombreuses et même être juxtaposées indéfiniment puisque ces sections sont pratiquement identiques, à l'exception de celles qui portent en plus la source de chaleur commune ou le ventilateur d'extraction commun, rendant ainsi la structure parfaitement modulaire et adaptable à volonté. Il en résulte que la longueur de chaque section peut être limitée à une valeur convenable, par exemple de l'ordre de 2,5 m pour les largeurs de bandes courantes, ou de 3 m pour les petites largeurs de bande (étant entendu que plus l'appareil doit être large en raison de la largeur des bandes à traiter, plus le nombre de sections suivant la longueur peut être augmenté, afin de limiter le débit que doit fournir chaque ventilateur de recyclage). Cette subdivision de l'enveloppe permet ainsi d'assurer à chaque section de celle-ci une tenue mécanique convenable au niveau des éléments de soufflage. Cette même subdivision, permettant une répartition régulière des éléments de soufflage reliés au ventilateur de recyclage de chaque section, favorise l'uniformité du soufflage et la répartition de la température.

. On assure en outre une distance constante entre les éléments de soufflage d'une extrémité à l'autre de l'enveloppe et on évite donc toute discontinuité dans la sustentation de la bande, de sorte qu'il ne peut apparaitre aucun flottement de cette bande au passage d'une section à la suivante.

Par ailleurs, les éléments de soufflage d'entrée et de sortie fournissent des rideaux d'air qui s'opposent à une entrée d'air extérieur froid, par l'ouverture d'entrée ou de sortie, l'air soufflé sous forme de rideau étant pris à l'extérieur de l'enveloppe et préchauffé, ce qui élimine les risques de condensation de produits nuisibles (solvants par exemple) à l'intérieur de l'enveloppe, tout en réduisant le débit d'extraction nécessaire.

De manière particulièrement avantageuse, les fentes d'éjection d'air de chaque élément de soufflage supérieur et inférieur équipant l'ouverture d'entrée et de sortie comprennent deux fentes espacées dans le sens de déplacement de la bande, l'espace entre les fentes supérieures étant décalé et partiellement superposé à l'espace entre les fentes inférieures.

Cet agencement crée un nœud supplémentaire sur la trajectoire de la bande, à l'entrée ou à la sortie de l'enveloppe, stabilisant ainsi encore mieux le mouvement de cette bande, notamment à l'entrée de celle-ci dans l'enveloppe, ce qui élimine tout claquement risquant d'entrainer des contacts nuisibles. En outre, la création de ce nœud supplémentaire, à proximité de l'ouverture d'entrée ou de sortie, réduit pratiquement à zéro le débattement possible de la bande dans cette ouverture, de sorte que l'on peut donner à la hauteur de cette ouverture une valeur minimale qui rend pratiquement nul le débit d'air extérieur froid risquant de pénétrer dans l'enveloppe par cette ouverture (ce débit étant fonction de la section de passage offerte et de la vitesse de passage, donc de la différence de pression de l'air entre l'extérieur et l'intérieur).

Avantageusement, la source de chaleur est un brûleur, le ventilateur qui alimente les éléments de soufflage sert également à fournir l'air de combustion pour ce brûleur. Cette disposition permet d'éviter l'installation d'une source d'air supplémentaire et de réduire la consommation d'énergie puisque, en régime normal, le brûleur ne fonctionne qu'à environ le tiers de sa puissance, la puissance maximale n'étant utilisée que lors de la montée en température de l'appareil, tandis qu'il n'y a par ailleurs aucun inconvénient à disposer d'une pression d'air plus faible dans les éléments de soufflage d'entrée et de sortie lors de la montée en température puisqu'il n'y a pas encore, à ce moment, de solvant passant dans l'appareil et risquant d'entraîner une condensation.

De préférence également, les moyens de préchauffage sont constitués par un échangeur de chaleur situé dans la chambre de combustion dudit brûleur.

On peut aussi prévoir que la bande séchée est utilisée comme moyens de préchauffage.

Avantageusement, l'aspiration du ventilateur alimentant les éléments de soufflage d'entrée et de sortie est associée à un refroidisseur de bande disposé à la sortie de l'appareil de séchage.

De préférence, le ventilateur d'extraction est logé à l'intérieur de l'enveloppe de l'appareil, tandis que son moteur d'entraînement est disposé à l'extérieur de cette enveloppe.

Avantageusement, la commande de débit du ventilateur d'extraction est reliée à un dispositif de réglage automatique lui-même asservi, non seulement à un organe de mesure de différence de pression entre l'extérieur et l'intérieur de l'enveloppe, mais encore à un organe de mesure d'un second paramètre lié à la concentration en solvant régnant dans l'appareil. Ceci permet de réduire l'extraction lorsque la concentration en solvant est faible et de l'augmenter lorsque cette concentration est élevée, cette régulation étant essentielle pour éviter les condensations nuisibles rappelées plus haut. Le second paramètre utilisé peut être constitué, par exemple, par la vitesse de la rotative dans le cas d'une ligne d'impression, par la puissance du brûleur, ou encore par la concentration d'oxygène dans l'enveloppe ou la concentration elle-même des solvants dans l'air extrait.

Dans un mode de réalisation particulièrement avantageux de l'invention, lesdits conduits reliant le refoulement du ventilateur de recyclage aux éléments de soufflage sont équipés de passages d'introduction de gaz chaud de combustion, tandis que ledit brûleur est placé à l'extrémité d'une chambre de combustion présentant une entrée d'air recyclé de combustion reliée directement au refoulement d'un des ventilateurs de recyclage, ladite entrée étant située le long de cette chambre de combustion, en amont dudit brûleur, tandis que les passages d'introduction de gaz chaud de combustion dans les conduits sont placés en aval dudit ventilateur de recyclage. Cette disposition permet de réaliser un mélange en deux temps, une première dilution du gaz du brûleur étant effectuée avec l'air provenant directement du ventilateur de recyclage associé à ce brûleur, puis une seconde dilution avec l'air envoyé par ce même ventilateur directement aux conduits de soufflage, ce qui assure une plus grande souplesse de réglage de la température et de la pression, et une température plus uniforme. De plus, la disposition des passages d'apport de chaleur aux conduits de soufflage en aval du ventilateur de recyclage, évite toute dégradation ou destruction de ce dernier.

De préférence, la source de chaleur est commune à au moins deux sections, la température de l'air parvenant aux éléments de soufflage de chaque section est réglable indépendamment par dosage de l'apport de chaleur vers chacune des sections au moyen de registres ; c'est ainsi par exemple, que des volets à orientation réglable peuvent être disposés dans les passages d'apport de chaleur aux conduits de soufflage d'au moins l'une des sections d'enveloppe, ce qui permet un réglage du débit de gaz brûlés sortant de la chambre de combustion en direction des diverses sections, de manière à obtenir dans ces sections des températures différentes et à fournir ainsi une évolution progressive du chauffage de la bande en déplacement. Ces volets peuvent être réglés manuellement ou automatiquement, et, dans ce dernier cas, les volets d'une section peuvent être reliés à un dispositif de réglage automatique, lui-même relié à des sondes de températures disposées dans cette section et dans une section directement juxtaposées.

Dans une réalisation particulière, il peut être prévu que les éléments de soufflage d'une même section d'enveloppe soient répartis en au moins deux groupes qui sont reliés aux moyens d'alimentation en mélange gaz de combustion/air recyclé par l'intermédiaire de deux moyens de réglage de température réglables séparément ; la section peut être divisée, à l'aide de cloisons, en au moins deux parties, un volet de réglage étant réalisé en autant d'éléments réglables séparément, ce qui permet d'obtenir des températures de soufflage différentes et contrôlables dans cette même section.

De préférence, les éléments de soufflage sont portés par des éléments longitudinaux constitués par des tubes présentant des orifices de passage d'air qui communiquent avec lesdits éléments de soufflage et sont ouverts à leurs extrémités, une partie de l'air insufflé pouvant ainsi s'échapper à l'intérieur de l'enveloppe.

D'autres caractéristiques et avantages de l'invention ressortiront de la description qui va suivre, à titre d'exemple non limitatif, et en regard des dessins annexés sur lesquels :

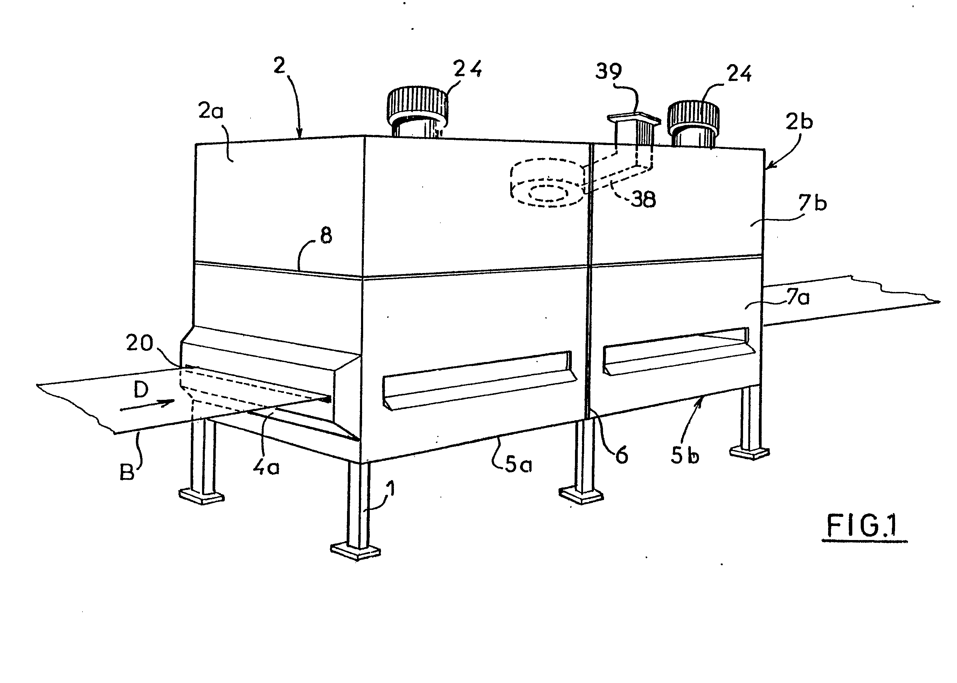

la Figure 1 représente une vue extérieure et en perspective d'un appareil suivant un mode de réalisation particulier conforme à l'invention, et comprenant deux sections ;

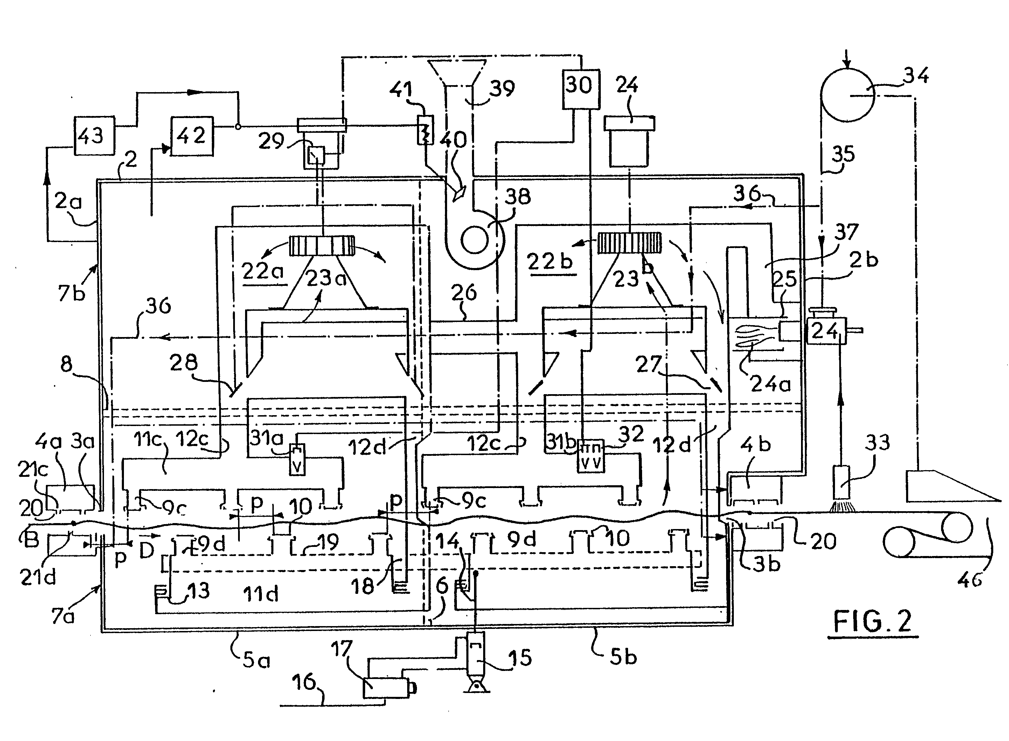

la Figure 2 représente une vue schématique de cet appareil prise en coupe verticale suivant le plan vertical et longitudinal de cet appareil ;

la Figure 3 représente une vue en perspective d'un ensemble de soufflage suivant un mode de réalisation particulier de l'invention qui comprend une paroi de séparation ;

la Figure 4 représente une coupe transversale de la partie de l'appareil qui est traversée par la bande ;

la Figure 5 représente un détail de la Fig. 4 suivant un mode de réalisation particulier de l'invention.

L'appareil représenté par ces figures est un appareil de séchage de bandes de papier imprimé sortant d'une ligne d'impression offset.

Cet appareil comprend, montée sur un support constitué par des pieds 1, une enveloppe fermée 2 qui présente une forme d'ensemble parallélépipédique, et comportant deux faces extrêmes verticales 2a et 2b dans chacune desquelles est ménagée une ouverture d'entrée 3a ou de sortie 3b, devant laquelle est disposée une paire d'éléments de soufflage 4a ou 4b fixée extérieurement sur lesdites faces extrêmes 2a et 2b, les deux ouvertures 3a et 3b définissant un plan horizontal de déplacement de la bande à sécher, le déplacement s'effectuant suivant une direction D orientée horizontalement de l'ouverture d'entrée 3a vers l'ouverture de sortie 3b.

Suivant la direction longitudinale de l'appareil que constitue cette direction de déplacement D, l'enveloppe est constituée de deux sections distinctes constituées par des caissons 5a et 5b parallélépipédiques qui se raccordent suivant un plan vertical 6 et qui sont fixées entre elles suivant ce plan.

Dans le sens vertical, chacune de ces sections 5a et 5b comprend deux éléments de caisson 7a et 7b superposés, le caisson inférieur 7a constituant un caisson de soufflage tandis que le caisson supérieur 7b constitue un caisson de réchauffage, les éléments se raccordant suivant un plan horizontal 8.

Dans chacun des caissons de soufflage 7a des deux sections 5a et 5b, se trouvent disposées deux séries d'éléments de soufflage 9c et 9d, disposés dans deux plans horizontaux parallèles au plan moyen de la bande B et placés à une faible distance de ce plan, par exemple de l'ordre de 3 à 4 mm. Chacun des éléments de soufflage 9c ou 9d est constitué par une barre de forme allongée orientée transversalement par rapport à la direction D, cette barre étant creuse et comportant sur sa face tournée vers la bande B deux fentes parallèles, transversales par rapport à la direction D et s'étendant sur toute la largeur de la bande B, ces fentes 10 étant séparées par une partie pleine qui permet de créer un coussin d'air assurant la sustentation de la bande B vers le haut ou vers le bas. Les barres d'air 9c disposées au-dessus de la bande B, sont disposées de manière alternée dans le sens longitudinal de la direction D avec les barres inférieures 9d, en même nombre, de manière à assurer une équidistance régulière entre ces différentes barres alternées, suivant un pas p.

Les différents éléments 9c ou 9d, disposés au-dessus ou au-dessous de la bande, sont fixés sur un collecteur ou plenum 11c ou 11d qui s'étend horizontalement suivant la direction D sur toute la longueur de la série d'éléments associés, chaque collecteur communiquant à la fois avec les barres d'air 9c et 9d, et avec une gaine de communication 12c ou 12d, ces gaines débouchant dans les collecteurs 11c et 11d, au milieu de la longueur de ces derniers, de façon parfaitement symétrique (bien que pour des raisons de clarté, la jonction de la gaine inférieure 12d ait été reportée, dans la figure, à une extrémité du collecteur).

La même disposition est exactement prévue dans la seconde section d'enveloppe 5b. Les deux collecteurs supérieurs 11c et les deux collecteurs inférieurs 11d sont par ailleurs disposés dans le sens longitudinal, de manière telle que le même pas p que celui qui sépare les différents éléments d'un collecteur, sépare également le dernier élément 9d du collecteur inférieur de la première section du premier élément du collecteur supérieur de la seconde section assurant ainsi une alternance parfaite des coussins d'air d'une extrémité à l'autre de l'enveloppe.

Les collecteurs inférieurs 11d sont montés en deux parties coulissantes de manière télescopique l'une par rapport à l'autre dans le sens vertical, avec interposition de joints élastiques 13 entre des rebords ménagés en regard l'un de l'autre sur les deux parties qui les constituent. La partie inférieure des collecteurs inférieurs étant fixe, leur partie supérieure qui porte les barres d'air 9d peut donc être déplacée verticalement, ceci sous l'action d'un mécanisme de déplacement vertical, à bielle et manivelle, schématisé en 14 et prenant appui sur l'enveloppe elle-même. Le mécanisme 14 est commandé à l'aide d'un vérin 15 qui est lui-même alimenté en air comprimé 16 par l'intermédiaire d'un distributeur 17. Ceci permet d'abaisser l'ensemble des éléments de soufflage inférieurs soit pendant l'arrêt de l'appareil, par exemple pour le lavage des plaques, soit en cours de fonctionnement pour éviter de dégrader le papier qui, trop chauffé, casserait et exigerait une remise en service entraînant une perte de temps importante. Le mécanisme 14 supporte les deux éléments tubulaires creux longitudinaux 18 qui sont disposés latéralement, de part et d'autre des collecteurs 11d et sur lesquels sont fixés les éléments de soufflage 9d.

Comme le montrent plus précisément les Fig. 4 et 5, chacune des barres d'air 9c qui communique dans sa partie centrale et par sa face supérieure avec le collecteur ou plenum supérieur 11c, se trouve, par ailleurs, fixée et suspendue à chacune de ses deux extrémités au-dessous d'un des deux éléments tubulaires creux 18 qui est lui-même suspendu à demeure sur l'enveloppe 2. Des trous 19 sont ménagés entre ces éléments 18 et les barres d'air 9c, de manière à assurer une pénétration d'air chaud à l'intérieur de ces éléments 18 qui sont, par ailleurs, ouverts à leurs extrémités, cette circulation d'air assurant, de ce fait, une température uniforme. Il en est de même pour les barres d'air inférieures 9d qui sont fixées et portées d'une manière exactement symétrique au-dessus d'autres éléments tubulaires creux 18, fixés sur une partie 18a qui peut être déplacée verticalement à l'aide du mécanisme 14. Des trous 19 sont également prévus entre les barres 9d et ces éléments 18, pour assurer une circulation analogue.

Chaque paire d'éléments de soufflage d'entrée 4a et de sortie 4b offre un passage horizontal à la bande B au niveau des ouvertures d'entrée 3a et de sortie 3b de l'enveloppe, ces passages horizontaux 20 comportant des éléments de soufflage, constitués par des fentes transversales à la direction D, prévues au nombre de deux sur chacune des faces supérieure et inférieure de ce passage, les deux fentes supérieures 21c étant disposées de manière alternée avec les deux fentes inférieures 21d suivant la direction longitudinale D. Ces fentes 21c et 21d sont disposées pratiquement à la même distance de la bande B que les fentes des barres d'air 9c et 9d, et la fente 21d ou 21c de chaque élément de soufflage la plus rapprochée de la paroi d'extrémité 2a ou 2b de l'enveloppe est située au plus près de l'ouverture d'entrée 3a ou 3b, cette même fente 21c ou 21d se trouvant, par ailleurs, disposée à la même distance p de la barre d'air 9c ou 9d intérieure la plus voisine. L'air sortant par chacune des fentes 21c, 21d forme un rideau d'air qui sépare les gaz se trouvant à l'intérieur de l'enveloppe 2 de l'air extérieur. De plus, les fentes étant disposées par deux, de chaque côté de la bande, il se forme des coussins d'air qui maintiennent également des nœuds d'ondulation sur la trajectoire suivie par la bande B.

Dans chacun des éléments supérieurs 7b des deux sections 5a et 5b, se trouve disposé un caisson de recyclage 22a ou 22b, chacun de ces caissons communiquant avec le refoulement d'un ventilateur de soufflage ou recyclage 23a ou 23b qui est fixé sous la face supérieure de l'enveloppe 2, de sorte que seul le moteur d'entraînement 24 de chaque ventilateur est disposé au-dessus de cette enveloppe. Les deux extrémités, dans le sens transversal, de chacun des caissons 22a ou 22b sont reliées aux gaines verticales 12c et 12b qui débouchent dans les collecteurs 11c et 11d.

Dans la paroi de sortie 2b de l'enveloppe, et au niveau de l'élément supérieur 7b, se trouve fixé un brûleur 24 qui peut être constitué par un brûleur mixte fonctionnant soit au gaz, soit au fuel. A l'intérieur de l'enveloppe, la torche du brûleur qui émet la flamme 24a se trouve entourée, avec un certain intervalle 25, par une chambre cylindrique de combustion qui s'étend depuis ce brûleur jusqu'à l'extrémité avant du caisson de soufflage 22a. Cette chambre de combustion 26 présente, au niveau des deux caissons de soufflage 22a et 22b, des parties élargies en forme de hottes dirigées vers le bas et qui communiquent par des passages 27 avec les gaines verticales 12c et 12d. Sur les bords de ces passages 27, sont articulés des volets de réglage 28 qui permettent de répartir la proportion entre l'air recyclé provenant du ventilateur 23a ou 23b et les gaz brûlés provenant de la chambre de combustion 26.

Dans une réalisation particulière, les volets de réglage 28 de la première section 5a sont reliés mécaniquement à un moteur d'asservissement 29 qui est lui-même relié électriquement à un dispositif de régulation 30 recevant les valeurs données par deux sondes de température 31a et 31b disposées respectivement dans les deux collecteurs supérieurs 11c. La commande du brûleur 24 est reliée à un détecteur de température à infrarouge 33 disposé en aval du bloc de sortie 4b. L'entrée d'air de combustion du brûleur 24 est enfin reliée au refoulement d'un ventilateur 34 qui aspire lui-même dans la hotte d'un refroidisseur 46, disposée en aval de l'appareil de séchage, et dans lequel pénètre ensuite la bande B.

Sur la tuyauterie 35 d'alimentation en air de combustion du brûleur, se trouve piquée une seconde tuyauterie 36 qui pénètre dans la chambre de combustion 26, au niveau du caisson 22b et traverse cette chambre jusqu'à son extrémité, de manière à constituer, avec cette dernière, un échangeur de chaleur, la tuyauterie se subdivisant ensuite pour rejoindre les deux blocs de soufflage d'entrée 4a et de sortie 4b, à la fois dans les parties supérieure et inférieure de ces derniers.

Le caisson de soufflage 22b de la seconde section communique également avec une troisième gaine 37 qui est coudée, de manière à venir envelopper la chambre de combustion 26 au voisinage du brûleur, et à communiquer avec l'intervalle 25 laissé libre autour de ce dernier, de manière à faire pénétrer de l'air recyclé à ce niveau.

Il est enfin prévu, entre les deux caissons de soufflage 22a et 22b, un ventilateur d'extraction 38 qui est fixé sous la paroi supérieure de l'enveloppe 2, de la même manière que les ventilateurs 23a et 23b, et qui communique avec une cheminée de mise à l'air 39. Sur celle-ci se trouve interposé un volet de régulation de débit d'air extrait 40, qui est actionné par un vérin 41 recevant, d'une part, un signal provenant d'un dispositif de régulation 42 alimenté en air et traduisant la dépression régnant dans l'enveloppe, et, d'autre part, un signal provenant d'un transmetteur 43 traduisant la concentration en solvant à l'intérieur de l'enveloppe.

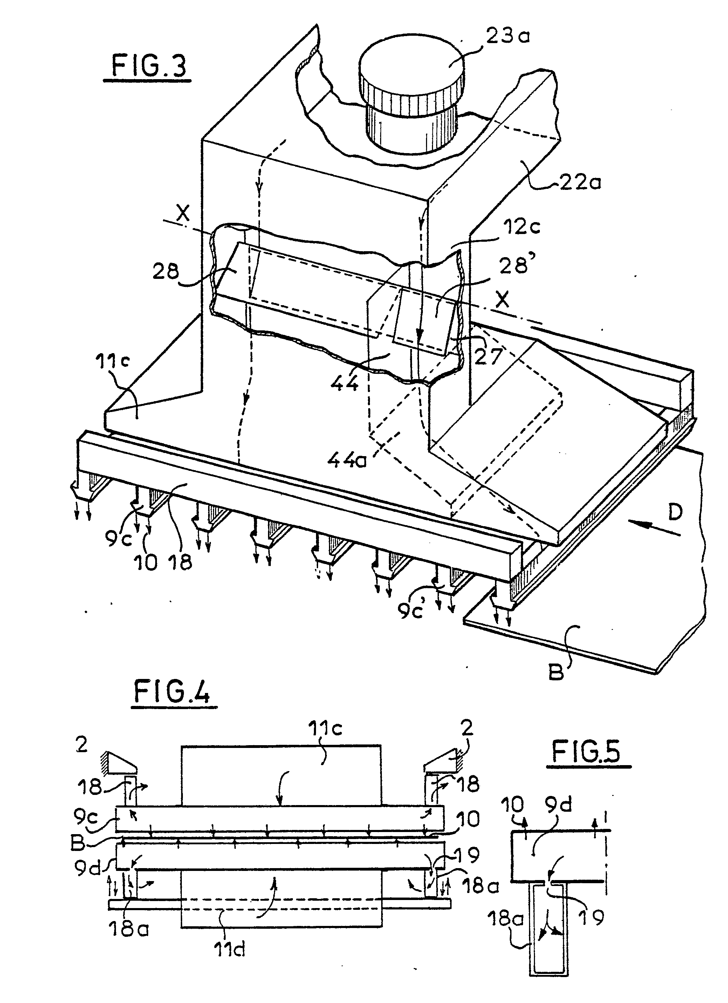

Comme le montre plus précisément la Fig. 3, le collecteur ou plenum supérieur 11c présente la forme d'un caisson parallélépipédique allongé, à l'extrémité en sifflet, c'est-à-dire un caisson dont la section par un plan vertical parallèle à la direction de déplacement D de la bande est un trapèze. C'est sur toute la largeur de ce caisson et au-dessous de celui-ci que sont fixées les barres d'air 9c. Au-dessus de ce caisson, et seulement sur une partie de sa largeur, se trouve disposée la gaine 12c qui s'étend, par contre, sur toute la longueur de la face supérieure du plenum 11c. A son extrémité supérieure, cette gaine 12c communique avec un autre caisson 22a d'alimentation, qui s'étend suivant la même longueur que lui, suivant la direction D, qui s'en écarte transversalement (suivant le sens des barres d'air 9c) et à l'intérieur duquel se trouve disposé le ventilateur de recyclage 23a. A l'intérieur de la gaine de soufflage 12c, se trouve disposée une cloison verticale orientée transversalement 44, cette cloison se prolongeant par une autre cloison 44a qui s'étend également transversalement sur toute la largeur du collecteur 11c, mais est inclinée de manière sensiblement parallèle à l'une des extrémités inclinées de ce collecteur. Au milieu de la gaine 12c, se trouvent montés, articulés autour d'un axe horizontal X-X, parallèle à la direction D d'avance de la bande, deux volets de réglage 28 et 28' disposés respectivement de part et d'autre de la cloison 44, sur la section de cette gaine 12c. Ce sont ainsi deux flux d'air qui parviennent respectivement, de part et d'autre des cloisons 44 et 44a, jusqu'au groupe des barres d'air 9c situé à l'avant de la cloison 44a, et jusqu'au groupe situé à l'arrière de celle-ci.

Il convient enfin de noter que l'on peut prévoir que chaque section d'enveloppe contienne deux éléments d'enveloppe disposés l'un par rapport à l'autre, au-dessus, au-dessous ou sur le côté, et ceci transversalement par rapport à la direction de passage de la bande, ces éléments comprenant l'un la zone de soufflage et l'autre la zone de réchauffage, ce qui offre une grande souplesse d'adaptation en fonction de l'espace disponible ou de toute extension latérale voulue pour l'appareil. L'élément de réchauffage de chaque section peut être situé à distance de l'élément de soufflage, auquel cas un troisième élément assure la liaison entre les deux.

**Revendications**

1. Appareil de séchage à air chaud, avec sustentation simultanée, pour bandes continues de matériaux souples, notamment de bandes de papier sortant des groupes d'impression offset, du type comprenant une enveloppe (2) à l'intérieur de laquelle sont disposées, entre deux ouvertures (3a, 3b) d'entrée et de sortie de bande, deux rangées d'éléments de soufflage (9c, 9d) disposées l'une au-dessus et l'autre au-dessous du plan de déplacement de la bande, ces éléments de soufflage présentant des fentes d'éjection d'air (10) orientées transversalement par rapport à la direction (D) d'avancement de la bande, ces fentes s'ouvrant vers la bande (B) à sécher, lesdits éléments de soufflage (9c, 9d) étant reliés à au moins un ventilateur de recyclage (23a, 23b) et à une source de chaleur (24), l'enveloppe (2) étant reliée, en outre, à un ventilateur d'extraction (38), appareil caractérisé en ce que, suivant la direction (D) d'avancement de la bande, l'enveloppe (2) est constituée d'au moins deux sections distinctes (5a, 5b) fixées entre elles, chacune de ces sections comprenant un ensemble de soufflage (23a-9c-9d, 23b-9c-9d), celui-ci comportant deux rangées d'éléments de soufflage (9c, 9d) et un ventilateur de recyclage (23a, 23b) dont l'aspiration communique avec le volume intérieur de la section de l'enveloppe (2) et le refoulement est raccordé auxdites rangées d'éléments de soufflage (9c, 9d) par des conduits (12c, 12d) équipés de passages d'apport de chaleur (27) reliés à la source de chaleur (24), et en ce que chacune des deux ouvertures (3a, 3b) d'entrée et de sortie de bande est équipée de deux éléments de soufflage (4a, 4b) qui sont placés l'un en dessus et l'autre en dessous de cette ouverture (3a, 3b) et qui sont orientés transversalement par rapport à la direction (D) de déplacement de la bande et présentant chacun, sur toute la largeur de cette bande, au moins une fente d'éjection d'air (21c, 21d) s'ouvrant vers la bande (B) à sécher, ces éléments de soufflage (4a, 4b) étant reliés (36) au refoulement (35) d'un ventilateur (34) qui aspire de l'air à l'extérieur de l'enveloppe (2) de l'appareil, cet air étant préchauffé à l'aide de moyens de préchauffage (24-26-36, 16).

2. Appareil selon la revendication 1, caractérisé en ce que les fentes d'éjection d'air (21c, 21d) de chaque élément de soufflage supérieur et inférieur (4a, 4b) équipant l'ouverture d'entrée et de sortie (3a, 3b) comprennent deux fentes espacées dans le sens de déplacement (D) de la bande, l'espace entre les fentes supérieures (21c) étant décalé et partiellement superposé à l'espace entre les fentes inférieures (21d).

3. Appareil selon l'une quelconque des revendications 1 et 2, caractérisé en ce que lesdits éléments de soufflage (4a, 4b) sont disposés extérieurement sur l'enveloppe (2).

4. Appareil selon l'une quelconque des revendications 1 à 3, caractérisé en ce que la source de chaleur (24) est un brûleur, et le ventilateur (34) qui alimente les éléments de soufflage (4a, 4b) sert également à fournir l'air de combustion pour ce brûleur (24).

5. Appareil selon la revendication 4, caractérisé en ce que les moyens de préchauffage (24-26-36) sont constitués par un échangeur de chaleur (36) situé dans la chambre de combustion (26) dudit brûleur (24).

6. Appareil selon l'une quelconque des revendications 1 à 4, caractérisé en ce que la bande séchée est utilisée comme moyens de préchauffage.

7. Appareil selon la revendication 6, caractérisé en ce que l'aspiration du ventilateur (34) alimentant les éléments de soufflage d'entrée et de sortie (4a, 4b) est associée à un refroidisseur de bande (46) disposé à la sortie de l'appareil de séchage.

8. Appareil selon l'une quelconque des revendications 1 à 7, caractérisé en ce que le ventilateur d'extraction (38) est logé à l'intérieur de l'enveloppe (2) de l'appareil, tandis que son moteur d'entraînement est disposé à l'extérieur de cette enveloppe (2).

9. Appareil selon l'une quelconque des revendications 1 à 8, caractérisé en ce que la commande de débit (40) du ventilateur d'extraction (38) est reliée à un dispositif de réglage automatique (41) lui-même asservi, non seulement à un organe (42) de mesure de différence de pression entre l'extérieur et l'intérieur de l'enveloppe (2), mais encore à un organe (43) de mesure d'un second paramètre lié à la concentration en solvant régnant dans l'appareil.

10. Appareil selon l'une quelconque des revendications 4 à 9, caractérisé en ce que lesdits conduits (12c, 12d) reliant le refoulement du ventilateur de recyclage (23a, 23b) aux éléments de soufflage (9c, 9d) sont équipés de passages d'introduction de gaz chaud de combustion (27, 28), tandis que ledit brûleur (24) est placé à l'extrémité d'une chambre de combustion (26) présentant une entrée (25) d'air recyclé de combustion reliée directement au refoulement (22b) d'un des ventilateurs de recyclage (23a, 23b), ladite entrée étant située le long de cette chambre de combustion (26), en amont dudit brûleur (24), tandis que les passages d'introduction de gaz chaud de combustion (27, 28) dans les conduits (12c, 12d) sont placés en aval dudit ventilateur de recyclage (23a, 23b).

11. Appareil selon la revendication 1, caractérisé en ce que la source de chaleur (24) est commune à au moins deux sections, la température de l'air parvenant aux éléments de soufflage (9c, 9d) de chaque section (5a, 5b) est réglable indépendamment par dosage de l'apport de chaleur (27) vers chacune des sections (5a, 5b) au moyen de registres (28).

12. Appareil selon la revendication 11, caractérisé en ce que les éléments de soufflage (9c, 9d) d'une même section (5a, 5b) d'enveloppe sont répartis en au moins deux groupes qui sont reliés aux moyens (23a, 23b-27) d'alimentation en mélange gaz de combustion/air recyclé par l'intermédiaire de deux moyens de réglage de température (28, 28') réglables séparément.

13. Appareil selon l'une quelconque des revendications 1 à 12, caractérisé en ce que les éléments de soufflage (9c, 9d) sont portés par des éléments longitudinaux (18) constitués par des tubes présentant des orifices de passage d'air (19) qui communiquent avec lesdits éléments de soufflage et sont ouverts à leurs extrémités, une partie de l'air insufflé pouvant ainsi s'échapper à l'intérieur de l'enveloppe (2).

**Claims**

1. Hot-air drying apparatus, with a simultaneous lifting action, for continuous strips of flexible material, in particular strips of paper leaving offset printing units, of the type comprising a casing (2) inside which there are arranged, between an entry opening and an exit opening (3a, 3b) for the strip, two rows of blowing members (9c, 9d), one of which is arranged above and the other below the plane of movement of the strip, these blowing members having air-ejection slits (10) which are oriented transversely in relation to the direction (D) of movement of the strip, these slits facing the strip (B) to be dried, the said blowing members (9c, 9d) being connected to at least one recycling fan (23a, 23b) and to a heat source (24), the casing (2) being connected, moreover, to an extraction fan (38), apparatus characterized in that, in the direction (D) of movement of the strip, the casing (2) consists of at least two separate sections (5a, 5b) fixed to each other, each of these sections comprising a blowing assembly (23a-9c-9d, 23b-9c-9d), the latter comprising two rows of blowing members (9c, 9d) and a recycling fan (23a, 23b), the intake side of which communicates with the internal volume of the section of the casing (2) and the delivery side of which is connected to the said rows of blowing members (9c, 9d) by ducts (12c, 12d) provided with heat supply passages (27) connected to the heat source (24), and in that each of the two entry and exit openings (3a, 3b) for the strip is equipped with two blowing members (4a, 4b), one of which is located above and the other below this opening (3a, 3b) and which are oriented transversely in relation to the direction (D) of movement of the strip and each have, over the entire width of this strip, at least one air-ejection slit (21c, 21d) facing the strip (B) to be dried, these blowing members (4a, 4b) being connected (36) to the delivery side (35) of a fan (34) which sucks in air from outside the casing (2) of the apparatus, this air being preheated with the aid of preheating means (24-26-36, 16).

2. Apparatus according to Claim 1, characterized in that the air-ejection slits (21c, 21d) of each upper and lower blowing member (4a, 4b) with which the entry opening and the exit opening (3a, 3b) are equipped comprise two slits located at a distance from each other in the direction of movement (D) of the strip, the space between the

upper slits (21c) being offset and partially overlapping the space between the lower slits (21d).

3. Apparatus according to either one of Claims 1 and 2, characterized in that the said blowing members (4a, 4b) are arranged externally on the casing (2).

4. Apparatus according to any one of Claims 1 to 3, characterized in that the heat source (24) is a burner, and the fan (34) which supplies the blowing members (4a, 4b) also serves to supply the combustion air for this burner (24).

5. Apparatus according to Claim 4, characterized in that the preheating means (24-26-36) consist of a heat exchanger (36) located inside the combustion chamber (26) of the said burner (24).

6. Apparatus according to any one of Claims 1 to 4, characterized in that the dried strip is used as a preheating means.

7. Apparatus according to Claim 6, characterized in that the intake side of the fan (34) supplying the entry and exit blowing members (4a, 4b) is associated with a strip cooler (46) arranged at the exit of the drying apparatus.

8. Apparatus according to any one of Claims 1 to 7, characterized in that the extraction fan (38) is accommodated inside the casing (2) of the apparatus, while its drive motor is arranged outside this casing (2).

9. Apparatus according to any one of Claims 1 to 8, characterized in that the means (40) for controlling the flow-rate of the extraction fan (38) is connected to an automatic adjustment device (41) which is itself associated not only with a component (42) for measuring the difference in pressure between the inside and the outside of the casing (2), but also with a component (43) for measuring a second parameter relating to the solvent concentration existing inside the apparatus.

10. Apparatus according to any one of Claims 4 to 9, characterized in that the said ducts (12c, 12d) connecting the delivery side of the recycling fan (23a, 23b) to the blowing members (9c, 9d) are equipped with passages for introducing hot combustion gas (27, 28), while the said burner (24) is located at one end of a combustion chamber (26) having an inlet (25) for recycled combustion air, which is directly connected to the delivery side (22b) of one of the recycling fans (23a, 23b), the said inlet being located along this combustion chamber (26), upstream of the said burner (24), while the passages (27, 28) for introducing hot combustion gas inside the ducts (12c, 12d) are located downstream of the said recycling fan (23a, 23b).

11. Apparatus according to Claim 1, characterized in that the heat source (24) is common to at least two sections and the temperature of the air reaching the blowing members (9c, 9d) of each section (5a, 5b) can be regulated independently by metering the heat supply (27) to each of the sections (5a, 5b) by means of flaps (28).

12. Apparatus according to Claim 11, characterized in that the blowing members (9c, 9d) of a same casing section (5a, 5b) are divided up into at least two groups which are connected to the means (23a, 23b-27) for supplying a combustion gas/recycled air mixture by means of two temperature regulation means (28, 28') which can be adjusted separately.

13. Apparatus according to any one of Claims 1 to 12, characterized in that the blowing members (9c, 9d) are mounted on longitudinal members (18) consisting of tubes having air flow orifices (19) which communicate with the said blowing members and are open at their ends, part of the air blown in thus being able to escape inside the casing (2).

**Patentansprüche**

1. Vorrichtung zum Heißluft-Trocknen und gleichzeitigen Unterstützen von biegsamen Bahnen, insbesondere aus Offset-Druckmaschinen kommenden Papierbahnen, welche Vorrichtung ein Gehäuse (2) aufweist, in dessen Inneren zwischen zwei Öffnungen (3a, 3b) für den Eintritt und für den Austritt der Bahn zwei Reihen von Gebläseelementen (9c, 9d) angeordnet sind, wobei die eine Reihe oberhalb und die andere Reihe unterhalb der Bewegungsebene der Bahn angeordnet ist, welche Gebläseelemente Luftausstoßschlitze (10) aufweisen, die quer zur Vorschubrichtung (D) der Bahn verlaufen, welche Gebläselemente (9c, 9d) mit mindestens einem Umwälzventilator (23a, 23b) und einer Wärmequelle (24) verbunden sind, wobei das Gehäuse (2) außerdem mit einem Abzugsventilator (38) verbunden ist, dadurch gekennzeichnet, daß in Vorschubrichtung (D) der Bahn gesehen das Gehäuse (2) aus mindestens zwei miteinander verbundenen getrennten Abschnitten (5a, 5b) besteht, wobei jeder dieser Abschnitte mit einer Gebläseeinheit (23a-9c-9d, 23b-9c-9d) versehen ist, die zwei Reihen von Gebläseelementen (9c, 9d) und einen Umwälzventilator (23a, 23b) aufweist, dessen Ansaugung mit dem Innenraum des Abschnittes des Gehäuses (2) kommuniziert und dessen Abfluß mit den genannten Gebläseelementereihen (9c, 9d) über Leitungen (12c, 12d) verbunden ist, die mit der Wärmequelle (24) verbundene Wärmezufuhreinlässe (27) aufweisen, daß jede der beiden Eintritts- bzw. Austrittsöffnungen (3a bzw. 3b) für die Bahn mit zwei Gebläseelementen (4a, 4b) versehen ist, deren eines oberhalb und deren anderes unterhalb dieser Öffnung (3a, 3b) angeordnet ist, und die quer zur Vorschubrichtung (D) der Bahn ausgerichtet sind und deren jede, über die ganze Breite dieser Bahn, mindestens einen Luftausstoßschlitz (21c, 21d) aufweist, der sich gegen die zu trocknende Bahn (B) hin öffnet, wobei diese Gebläseelemente (4a, 4b) mit dem Abfluß (35) eines Ventilators (34) verbunden (36) sind, der Luft aus dem Inneren des Gehäuses der Vorrichtung (2) ansaugt, welche Luft durch Vorheizvorrichtungen (24-26-36, 16) vorgeheizt wurde.

2. Vorrichtung nach Anspruch 1, dadurch ge-

kennzeichnet, daß die Luftausstoßchlitze (21c, 21d) jedes oberen und unteren Gebläseelementes (4a, 4b) mit denen die Eintritts- und Austrittsöffnung (3a, 3b) ausgestattet ist, zwei Schlitze aufweist, die in Vorschubrichtung (D) der Bahn gesehen voneinander entfernt sind, wobei der Abstand zwischen den oberen Schlitzen (21c) gegenüber dem Abstand der unteren Schlitze (21d) versetzt und zum Teil über diesem gelegen ist.

3. Vorrichtung nach einem der Ansprüche 1 und 2, dadurch gekennzeichnet, daß die genannten Gebläseelemente (4a, 4b) außen auf dem Gehäuse (2) angeordnet sind.

4. Vorrichtung nach einem der Ansprüche 1 bis 3, dadurch gekennzeichnet, daß die Wärmequelle (24) ein Brenner ist, und daß der die Gebläseelemente (4a, 4b) speisende Ventilator (34) auch dazu dient, Verbrennungsluft für diesen Brenner (24) zu liefern.

5. Vorrichtung nach Anspruch 4, dadurch gekennzeichnet, daß die Vorheizvorrichtungen (24-26-36) aus einem Wärmetauscher (36) bestehen, der in der Verbrennungskammer (26) des genannten Brenners (24) angeordnet ist.

6. Vorrichtung nach einem der Ansprüche 1 bis 4, dadurch gekennzeichnet, daß die getrocknete Bahn als Vorwärmmittel benutzt wird.

7. Vorrichtung nach Anspruch 6, dadurch gekennzeichnet, daß die die Eintritts- und Austritts-Gebläseelemente (4a, 4b) speisende Ansaugung des Ventilators (34) mit einer am Ausgang der Trockenvorrichtung angeordneten Bahnkühl-Einrichtung (4) verbunden ist.

8. Vorrichtung nach einem der Ansprüche 1 bis 7, dadurch gekennzeichnet, daß der Abzugsventilator (38) im Inneren des Gehäuses (2) der Vorrichtung angeordnet ist, während sein Antriebsmotor außerhalb dieses Gehäuses (2) vorgesehen ist.

9. Vorrichtung nach einem der Ansprüche 1 bis 8, dadurch gekennzeichnet, daß die Leistungssteuerung (40) des Abzugsventilators mit einer automatischen Regelvorrichtung (41) verbunden ist, die ihrerseits nicht nur von einer Vorrichtung (42) zum Messen des Druckunterschiedes zwischen dem Äußeren und dem Inneren des Gehäuses (2) abhängig ist, sondern auch von einer Vorrichtung (43) zum Messen eines zweiten von der Lösungsmittelkonzentration in der Vorrichtung abhängigen Parameters.

10. Vorrichtung nach einem der Ansprüche 4 bis 9, dadurch gekennzeichnet, daß die genannten den Abfluß des Umwälzventilators (23a, 23b) mit den Gebläseelementen (9c, 9d) verbindenden Leitungen (12c, 12d) mit Einlässen (27, 28) zum Einführen von heißem Verbrennungsgas versehen sind, während der genannte Brenner (24) am Ende einer Verbrennungskammer (26) angeordnet ist, die einen Einlaß (25) für aus der Verbrennung wiedergewonnene Luft aufweist, der direkt mit dem Abfluß (22b) eines der Umwälzventilatoren (23a, 23b) verbunden ist, wobei der genannte Einlaß an dieser Verbrennungskammer (26) oberhalb des genannten Brenners (24) angeordnet ist, während die Einlässe (27, 28) zum Einführen von heißen Verbrennungsgasen in die Leitungen (12c, 12d) unterhalb des genannten Umwälzventilators (23a, 23b) angeordnet sind.

11. Vorrichtung nach Anspruch 1, dadurch gekennzeichnet, daß mindestens zwei Abschnitte eine gemeinsame Wärmequelle (24) haben, wobei die Temperatur der zu den Gebläseelementen (9c, 9d) jedes Abschnittes (5a, 5b) gelangenden Luft unabhängig durch Dosierung der Wärmezufuhr (27) mittels Regelklappen (28) zu jedem der Abschnitte (5a, 5b) reguliert werden kann.

12. Vorrichtung nach Anspruch 11, dadurch gekennzeichnet, daß die Gebläseelemente (9c, 9d) des gleichen Gehäuseabschnittes (5a, 5b) in zumindest zwei Gruppen geteilt sind, die durch Einrichtungen (23a, 23b-27) zur Speisung mit einem Brenngas/Luft-Gemisch verbunden sind, welche durch die Einschaltung der beiden getrennt einstellbaren Temperaturregelvorrichtungen (28, 28') rückgeführt wird.

13. Vorrichtung nach einem der Ansprüche 1 bis 12, dadurch gekennzeichnet, daß die Gebläseelemente (9c, 9d) von Längselementen (18) getragen sind, die aus Rohren bestehen, die Luftdurchlaßöffnungen (19) aufweisen, die mit den genannten Gebläseelementen kommunizieren und an ihren Enden offen sind, wodurch ein Teil der eingeblasenen Luft in das Innere des Gehäuses (2) entweichen kann.

FIG.1

0 066 661

FIG.2

## FIG.3

## FIG.4

## FIG.5